# EUROPEAN PATENT APPLICATION

(11) **EP 2 096 712 A1**
(43) Date of publication of application: **02.09.2009**
(21) Application number: 09163136.6
(22) Date of filing: 14.07.2005
(51) Int. Cl.: H01Q 21/28, H01Q 1/24, H01Q 9/04, H01Q 5/00, H04B 1/18

(54) **Antenna system comprising an adjustable inverted-F antenna**

(30) Priority: 26.07.2004 US 899278; 26.07.2004 US 899218; 26.07.2004 US 899285
(62) Divisional of application: 05771518.7
(71) Applicant: Kyocera Wireless Corporation, San Diego, CA 92121 (US)
(72) Inventor: Poilasne, Gregory, San Diego, CA 92102 (US); Fabrega-Sanchez, Jorge, San Diego, CA 92109 (US); Toncich, Stanley, S., San Diego, CA 92131 (US); Tran, Allen, San Diego, CA 92130 (US)
(74) Representative: Viering, Jentschura & Partner

(57) **Abstract**

A system is provided that comprises a transmit inverted-F antenna (400) having a variable capacitor (402,404) for selecting a transmit channel.

## Description

### RELATED APPLICATIONS

This application is related to co-pending U.S. Patent Application No. 10/899,285 entitled FULL-DUPLEX ANTENNA SYSTEM AND METHOD, of concurrent ownership, which is incorporated herein by reference in its entirety.

This application is also related to the following two pending U.S. applications filed on the same day as the above-mentioned co-pending U.S. application and having the same inventors, and which applications are incorporated herein by reference: U.S. Patent Application No. 10/899,218 entitled SYSTEM AND METHOD FOR IMPEDANCE MATCHING AN ANTENNA TO SUB-BANDS IN A COMMUNICATION BAND; and U.S. Patent Application No. 10/899,278 entitled SYSTEM AND METHOD FOR DUAL-BAND ANTENNA.

This application is also related to the following two U.S. applications filed on the same day as the present application and having the same inventors, and which applications are incorporated herein by reference: "SYSTEM AND METHOD FOR IMPEDANCE MATCHING AN ANTENNA TO SUB-BANDS IN A COMMUNICATION BAND"; and "SYSTEM AND METHOD FOR DUAL-BAND ANTENNA MATCHING".

### BACKGROUND OF THE INVENTION

### 1. Field of the Invention

This invention generally relates to wireless communication antenna and, more particularly, to a system and method for a full-duplex antenna and corresponding antenna matching circuitry.

### 2. Description of the Related Art

The size of portable wireless communications devices, such as telephones, continues to shrink, even as more functionality is added. As a result, the designers must increase the performance of components or device subsystems and reduce their size, while packaging these components in inconvenient locations. One such critical component is the wireless communications antenna. This antenna may be connected to a telephone transceiver, for example, or a global positioning system (GPS) receiver.

State-of-the-art wireless telephones are expected to operate in a number of different communication bands. In the US, the cellular band (AMPS), at around 850 megahertz (MHz), and the PCS (Personal Communication System) band, at around 1900 MHz, are used. Other communication bands include the PCN (Personal Communication Network) and DCS at approximately 1800 MHz, the GSM system (Groupe Speciale Mobile) at approximately 900 MHz, and the JDC (Japanese Digital Cellular) at approximately 800 and 1500 MHz. Other bands of interest are GPS signals at approximately 1575 MHz, Bluetooth at approximately 2400 MHz, and wideband code division multiple access (WCDMA) at 1850 to 2200 MHz.

Wireless communications devices are known to use simple cylindrical coil or whip antennas as either the primary or secondary communication antenna. Inverted-F antennas are also popular. The resonance frequency of an antenna is responsive to its electrical length, which forms a portion of the operating frequency wavelength. The electrical length of a wireless device antenna is often at multiples of a quarter-wavelength, such as 5λ/4, 3λ/4, λ/2, or λ/4, where λ is the wavelength of the operating frequency, and the effective wavelength is responsive to the physical length of the antenna radiator and the proximate dielectric constant.

Conventionally, each wireless device transceiver (receiver and/or transmitter) is connected to a discrete antenna that resonates in a particular communication band. The transceiver may be tuned to channels within the communication band. However, portable wireless devices are becoming available that incorporate a number of transceivers, each operating in a different communication band, or a transceiver that can be tuned to operate in a number of communications bands. A brute-force approach has been to add a different resonator or antenna for each communication band. For example, it is known to stack two microstrip patches with different areas to create non-harmonically related resonant frequency responses. Such a design is not always adequate to cover all the required frequencies (communication bands), however. One work-around solution for the above-mentioned antenna has been to widen the bandpass response of in the higher communication band, to cover GPS and PCS communications for example, and to use the lower communication band to resonate at cellular band (AMPS) frequencies. However, the widening of the higher band, to improve GPS and PCS performance, comes at the expense of cellular band performance.

Another antenna-related problem stems from the duplex nature of wireless telephone communications. Typically, the transmit sub-band frequencies of a communication band are located adjacent to the receive sub-band frequencies. As a result, the transmitter and receiver often share the use of the same antenna. In some aspects, the transmissions and received communications occur simultaneously. Since the antenna, and associated circuitry is shared, a significant amount of coupling may occur. For example, transmit signals that couple into the receiver raise the receiver noise floor and degrade sensitivity. Decoupling could be enhanced, the filtering circuitry simplified and made smaller, and the overall performance of a wireless telephone could be improved if the transmitter and receiver did not share the same antenna.

Conventional antenna designs incorporate the use of a dielectric material. Generally speaking, a portion of the field that is generated by the antenna returns to the counterpoise (ground), from the radiator, through the dielectric. The antenna is tuned to be resonant at frequencies, and the wavelength of the radiator, and dielectric constant have an optimal relationship at the resonant frequency. The most common dielectric is air, with a dielectric constant of 1. The dielectric constants of other materials are defined with respect to air.

Ferroelectric materials have a dielectric constant that changes in response to an applied voltage. Because of their variable dielectric constant, ferroelectric materials are good candidates for making tunable components. Conventional measurement techniques, however, have characterized ferroelectric components as substantially lossy, regardless of the processing, doping or other fabrication techniques used to improve their loss properties. They have therefore not been widely used. Ferroelectric tunable components operating in RF or microwave regions are perceived as being particularly lossy. This observation is supported by experience in radar applications where, for example, high radio frequency (RF) or microwave loss is the conventional rule for bulk (thickness greater than about 1.0 mm) FE (ferroelectric) materials especially when maximum tuning is desired. In general, most FE materials are lossy unless steps are taken to improve (reduce) their loss. Such steps include, but are not limited to: (1) pre and post deposition annealing or both to compensate for O₂ vacancies, (2) use of buffer layers to reduce surfaces stresses, (3) alloying or buffering with other materials and (4) selective doping.

As demand for limited range tuning of lower power components has increased in recent years, the interest in ferroelectric materials has turned to the use of thin film rather than bulk materials. The assumption of high ferroelectric loss, however, has carried over into thin film work as well. Conventional broadband measurement techniques have bolstered the assumption that tunable ferroelectric components, whether bulk or thin film, have substantial loss. In wireless communication matching circuits, for example, a Q of greater than 40, and preferably greater than 180 and, more preferably, greater than 350, is necessary at frequencies of about 2 GHz. These same assumptions apply to the design of antenna interface circuitry and transceivers.

Tunable ferroelectric components, especially those using thin films, can be employed in a wide variety of frequency agile circuits. Tunable components are desirable because they permit circuitry to be tuned in more than one communication band. A tunable component that covers multiple bands potentially reduces the total number of components, as discrete band fixed-frequency components and their associated switches become unnecessary. These advantages are particularly important in wireless handset design, where the need for increased functionality and lower cost and size are seemingly contradictory requirements. With CDMA handsets, for example, performance of individual components is highly stressed. FE materials may also permit integration of RF components that to-date have resisted shrinkage.

It would be advantageous if a full-duplex antenna system could be made using separate antennas for the transmit and receive functions.

It would be advantageous if the selectivity between the above-mentioned transmit and receive functions could be heightened using narrowband, selectable channels.

It would be advantageous if the above-mentioned antenna system could be made to work using an antenna with a selectable resonance, selectable impedance, a selectable impedance matching circuit, or combinations of the above-mentioned features.

### SUMMARY OF THE INVENTION

The present invention provides a full-duplex antenna system that is able to effective decouple transmit and receiver circuitry using two separate mechanisms. First, the system uses separate antennas for the transmitter and receiver. Second, the response of the antennas is narrowed. This is accomplished by making the channels at which the antenna operates frequency selectable. This frequency selectability can be accomplished by adjusting the antenna resonance. Alternately, the selectability is accomplished by adjusting the antenna impedance. As another alternative, the frequency selectability is accomplished by adjusting the impedance supplied by the antenna by its matching circuit. Further, the selectability can be accomplished using combinations of the above-mentioned adjustment mechanisms.

Accordingly, a method is provided for full-duplex antenna impedance matching. The method comprises: effectively resonating a first antenna at a frequency selectable first channel in a first frequency band; generating a first antenna impedance at the first channel frequency; effectively resonating a second antenna at a frequency selectable second channel in the first frequency band; generating a second antenna impedance at the second channel frequency; supplying a first conjugate impedance match at the first channel frequency; and, supplying a second conjugate impedance match at the second channel frequency. For example, the first antenna may be used for transmission, while the second antenna is used for received communications.

In a first aspect, supplying a first conjugate impedance match at the first channel frequency includes supplying a frequency selectable first conjugate impedance. Likewise, supplying a second conjugate impedance match at the second channel frequency includes supplying a frequency selectable second conjugate impedance. In a second aspect, generating a first antenna impedance at the first channel frequency includes generating a frequency selectable first impedance, and generating a second antenna impedance at the second channel frequency includes generating a frequency selectable second impedance.

In a third aspect, effectively resonating a first antenna at a frequency selectable first channel in a first frequency band includes selecting the frequency of resonance. Likewise, effectively resonating a second antenna at a frequency selectable second channel in a first frequency band includes selecting the frequency of resonance.

Further, the method may provide for full-duplex operation in two completely different communication bands. That is, the method may comprise effectively resonating the first antenna at a frequency selectable third channel in a second frequency band and generating a third antenna impedance at the third channel frequency. Effectively resonating the second antenna at a frequency selectable fourth channel in the second frequency band and generating a fourth antenna impedance at the fourth channel frequency. Then, third conjugate impedance match is supplied at the third channel frequency, and a fourth conjugate impedance match is supplied at the fourth channel frequency.

Additional details of the above-described method, a full-duplex antenna system, and a wireless telephone full-duplex system, are provided below.

### BRIEF DESCRIPTION OF THE DRAWINGS

Fig. 1 is a schematic block diagram of the present invention full-duplex antenna system for selectively tuning communication channels.
Fig. 2 is a frequency plot depicting the relationship between the first and second channels.
Fig. 3 is a schematic block diagram illustrating a resonant-frequency adjustable inverted-F antenna.
Fig. 4 is a schematic block diagram of an impedance adjustable inverted-F antenna.
Fig. 5 is a schematic block diagram of an impedance adjustable matching circuit.
Fig. 6 is a schematic block diagram illustrating another aspect of the system of Fig. 1.
Fig. 7 is a schematic block diagram of the present invention wireless telephone with a full-duplex antenna matching system.
Fig. 8 is a flowchart illustrating the present invention method for full-duplex antenna impedance matching.
Fig. 9 is a flowchart illustrating an alternate aspect of the method of Fig. 8.

### DETAILED DESCRIPTION

### OF THE PREFERRED EMBODIMENTS

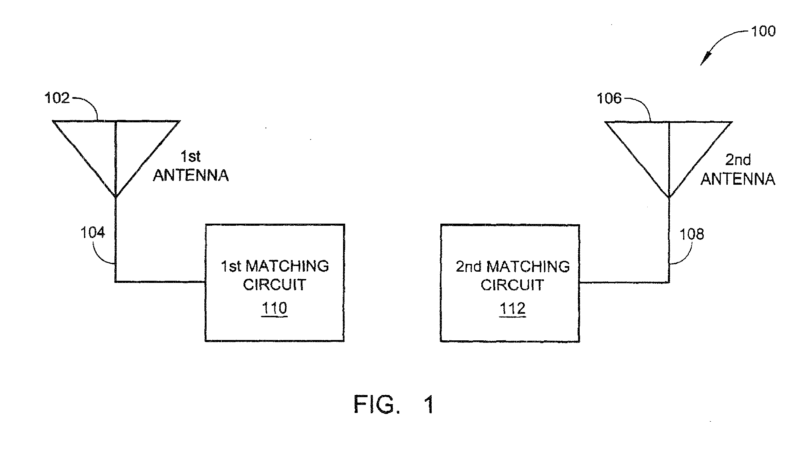

Fig. 1 is a schematic block diagram of the present invention full-duplex antenna system for selectively tuning communication channels. The system 100 comprises a first antenna 102 that is effectively resonant at a frequency selectable first channel in a first frequency band. Depending upon the communication system, the first channel has a minimum frequency span that varies from several kilohertz, to megahertz (MHz). Depending on the selectivity, the frequency span may be wide enough to cover several adjacent channels. The first antenna 102 has an interface port on line 104 with a first impedance at the first channel frequency.

A second antenna 106 is effectively resonant at a frequency selectable second channel in the first frequency band. The second antenna 106 has an interface on line 108 with a second impedance at the second channel frequency. A first matching circuit 110 includes a port connected on line 104 to the first antenna interface port having a first conjugate impedance at the first channel frequency. As is understood in the art, a conjugate impedance provides an approximately equal real value and opposite imaginary value to the impedance it is matching. Further, in many cases a true conjugate match cannot be provided for an entire frequency span of interest. Then, a conjugate match is often defined for the center frequency of the span. A second matching circuit 112 includes a port connected to the second antenna interface port on line 108 having a second conjugate impedance at the second channel frequency.

The frequency selectability of the first and second channels is associated with a number of related factors. These factors are: the antenna resonance frequency, or effective electrical length of the antenna, the antenna impedance, and the matching circuit impedance. For example, in a first situation the antenna 102 may be resonant at the first channel, but poorly matched. In this situation a significant amount of power is wasted as reflected power in the interface between the antenna 102 and antenna matching circuit 110. The first situation does not describe an antenna that is "effectively resonant at the first channel", as used herein. Likewise, in a second situation the first antenna 102 and first matching circuit 110 may be properly matched at the first channel frequency. However, the antenna may not radiate efficiently at the first channel frequency. That is, the effective electrical length of the antenna may not be a quarter-wavelength multiple of the first channel frequency. Again, this situation does not describe an antenna that is effectively resonant at the first channel, or first channel frequency.

In one aspect, the first antenna 102 effectively resonates with an antenna efficiency of greater than 30%, respective to each channel in the first frequency band. Likewise, the second antenna effectively resonates with an antenna efficiency of greater than 30%, respective to each channel in the first frequency band.

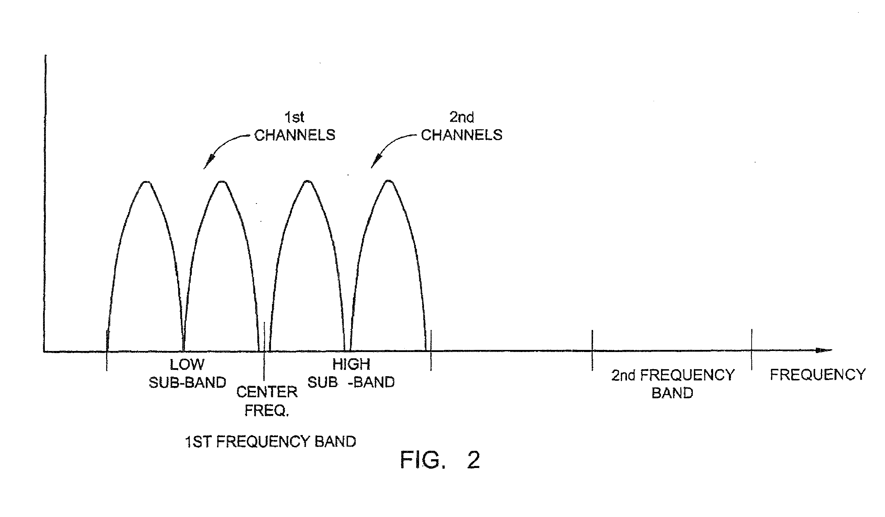

Fig. 2 is a frequency plot depicting the relationship between the first and second channels. For example, the first antenna (first channel) may receive radiated communications, while the second antenna (second channel) transmits radiated communications. As shown, the first channel can be selected with a low sub-band, while the second channel is selected from a high sub-band of the first frequency band. Although, only 2 first channel selections are shown in the figure, the invention is not limited to any particular number of first (or second) channel selections.

In one aspect, the first antenna has a first channel frequency span that is a fractional bandwidth of 0.0025, or greater, with respect to the first frequency band center frequency. Likewise, the second antenna has a second channel frequency span that is a fractional bandwidth of 0.0025, or greater, with respect to the first frequency band center frequency.

Returning to Fig. 1, in a first simple aspect of the system, the resonance and impedance of the first antenna 102 and second antenna 106 are fixed. In this scenario, the channel selectivity is accomplished through the conjugate matched supplied by the first matching circuit 110 and the second matching circuit 112. Alternately stated, first matching circuit 110 has a frequency selectable first conjugate impedance in the first frequency band. Likewise, the second matching circuit 112 has a frequency selectable second conjugate impedance in the first frequency band.

In a second simple scenario, the antenna resonance is fixed, as are the impedances supplied by the matching circuitry. Channel selectivity is provided by controlling the antenna impedance. The antenna impedance is (conjugately) matched to the fixed matching circuit impedance. That is, the first antenna 102 has a selectable first impedance and the second antenna 106 has a selectable second impedance.

In a third simple scenario, the antenna impedance and matching circuit impedances are fixed. The channel selectivity is achieved by controlling the antenna resonant frequency. That is, first antenna 102 resonance is frequency selectable, and the second antenna 106 resonance is frequency selectable.

It should be understood that channel selectivity can be obtained by combining features from the above-mentioned scenarios. For example, channel selectivity can be obtained by adjusting the antenna resonance along with the antenna impedance, or the antenna resonance with the matching circuit impedance, or the antenna impedance with the matching circuit impedance, or the antenna resonance, antenna impedance, and matching circuit impedance simultaneously.

Viewing both Figs. 1 and 2, in some aspects of the system the first antenna 102 also resonates at a frequency selectable third channel in a second frequency band. The first antenna 102 supplies a corresponding third impedance at the third channel frequency to the first matching circuit interface on line 104. Likewise, the second antenna 106 resonates a frequency selectable fourth channel in the second frequency band. The second antenna 106 supplies a corresponding fourth impedance at the fourth channel frequency to the second matching circuit interface on line 108. The first matching circuit 110 has a third conjugate impedance at the third channel frequency, and the second matching circuit 112 has a fourth conjugate impedance at the fourth channel frequency.

Typically, the system operates in either the first frequency band or the second frequency band, but not in the first and second frequency bands simultaneously. Alternately stated, the first and second antennas 102/106 may resonate simultaneously in the first frequency band. After retuning, the first and second antennas 102/106 may resonate simultaneously in the second frequency band.

This aspect of present invention is useful for a person who owns a cell phone that operates in the cell band at 824 to 894 MHz, for example, when they are home. On travel, the user's network may operate in a different band, for example the GSM 880-960 MHz band. Conventionally, the user has had to own two phones, one for home and one for travel. The present invention permits the user cell phone to efficiently operate in either environment, by selecting the proper frequency band. Alternately stated, the present invention enables a wireless device to efficiently use the same antenna and matching circuitry in two different bands. For example, common circuitry can be for both phone and GPS communications, to support 911 or location-based services.

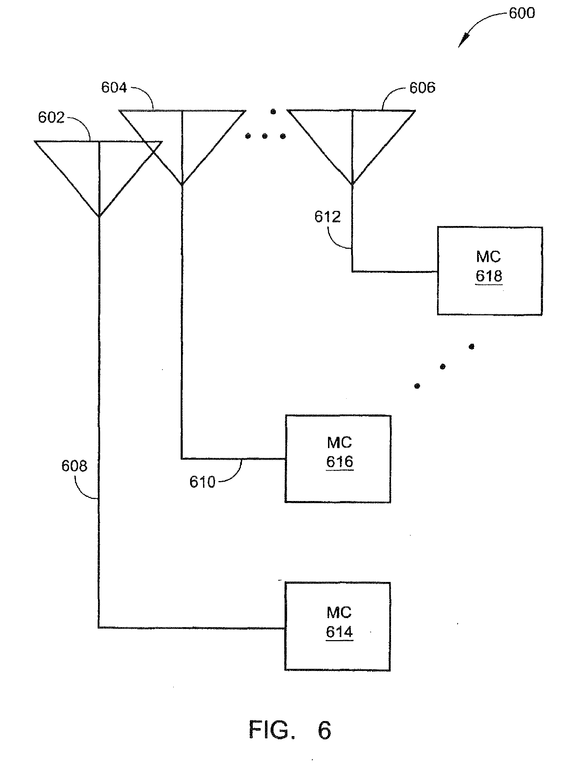

Fig. 6 is a schematic block diagram illustrating another aspect of the system of Fig. 1. Extending the above analysis of Fig. 1 still further, the system 600 comprises a plurality of antennas. Shown are antennas 602, 604, and 606, however, the system is not limited to any particular number of antennas. Each of these antennas 602-606 effectively resonates, as defined in the explanation of Fig. 1, at a frequency selectable channel in a frequency band, for example the first frequency band. Each antenna 602-606 has an interface port with an impedance at the selected channel frequency, on lines 608, 610, and 612, respectively. The system 600 further comprises a corresponding plurality of matching circuits (MCs) 614, 616, and 618. Each matching circuit 614 through 618 has a port connected to a corresponding antenna interface port on lines 608 through 612, respectively, to supply a conjugate impedance at the selected channel frequency. In one aspect, the antennas 602-606 simultaneously effectively resonate at a different channel. For example, the system could support one transmit channel and two receive channels, each at a different frequency. In another aspect, the antennas 602-606 simultaneously effectively resonate at the same channel. For example, the same channel frequency may be received on two different antennas, in the interests of antenna diversity.

To support wireless communications, the first and second antennas 102/106 may resonate at first and second channels, respectively, for a first frequency band in the range between 824 and 894 megahertz (MHz). Alternately, the first frequency band is in the range between 1850 and 1990 MHz, 880 and 960 MHz, 1710 and 1880 MHz, 1900 and 2100 MHz, 410 and 450 MHz, 2400 and 2480 MHz, 4900 and 5900 MHz, or 1565 and 1585 MHz, to name a few examples. The second frequency band may also be described by the above-mentioned list of frequency spans.

Antennas that are capable of resonance and impedance adjustments are described in the above-mentioned Related Applications, and these patent applications are incorporated herein by reference. Antenna matching circuits that are capable of supplying selectable conjugate impedances to an antenna have also been described and these applications are also incorporated herein by reference.

The first and second antennas may one of the following antenna types: inverted-F, monopole, dipole, horn, loop, helix, traveling wave, quadrifilar helix, balanced, unbalanced antennas, electric dipole, magnetic dipole, or capacitively-loaded magnetic dipole antennas. To help clarify the aspects of antenna selective resonance and adjustable impedance, an exemplary inverted-F antenna is described below. However, it should be understood that the present invention system is not limited to any particular antenna style. Neither is it necessary that the first and second antenna be the same type of antenna.

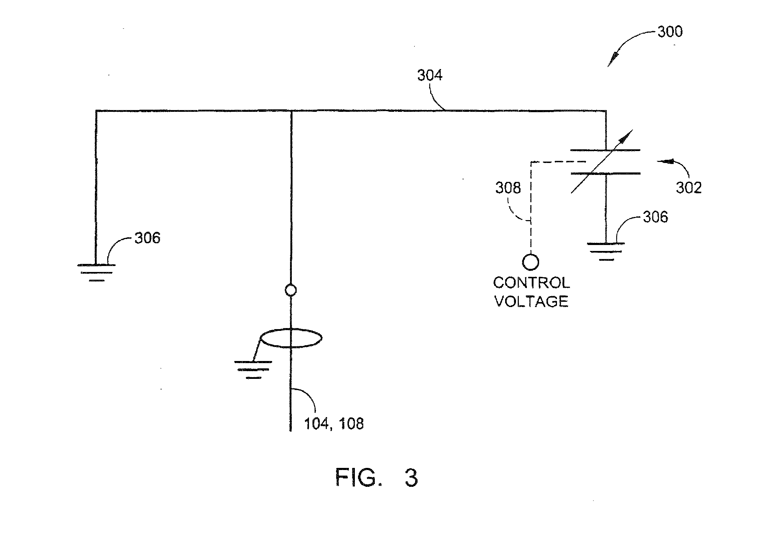

Fig. 3 is a schematic block diagram illustrating a resonant-frequency adjustable inverted-F antenna. In one aspect, the first antenna (and/or second antenna) is an inverted-F antenna 300. The inverted-F antenna 300 includes a first variable capacitor 302, connected in shunt between an antenna radiator 304 and a reference voltage 306. For example, the reference voltage may be ground. The first capacitor 302 is used to vary the frequency of resonance. Alternately stated, the first capacitor 302 is used to vary the effective electrical wavelength of the radiator 304.

In one aspect, the first variable capacitor 302 includes a ferroelectric dielectric with a dielectric constant responsive to a control voltage and an interface on line 308 to accept the control voltage. Ferroelectric (FE) capacitors capable of enabling the above-mentioned variable capacitor function are described in detail, in patent applications listed in the Related Applications Section, above. These FE-related applications are incorporated herein by reference. For example, the ferroelectric variable capacitor 302 may be an interdigital, gap, or overlay capacitors. However, it should be noted that the variable capacitor 302 may be fabricated from conventional components, or a combination of FE and conventional components.

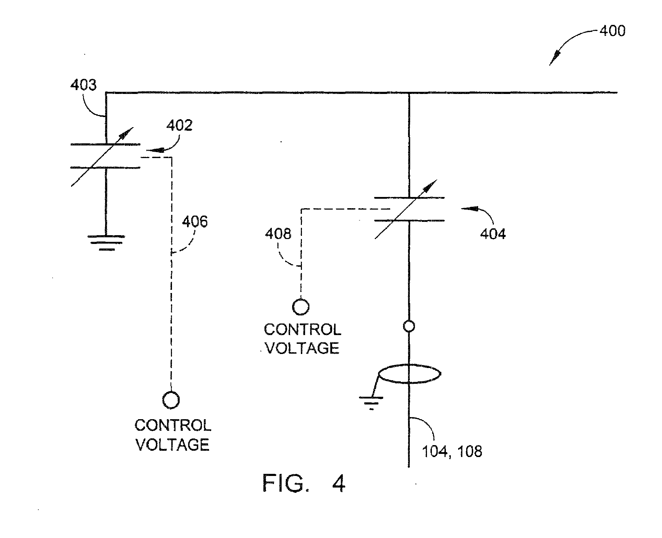

Fig. 4 is a schematic block diagram of an impedance adjustable inverted-F antenna. In one aspect, the first antenna is an inverted-F antenna 400 with a second variable capacitor 402, in series in a leg of a grounded resonator section 403, to vary the first impedance. Alternately, a third variable capacitor 404 is shown connected in series with a matching circuit (not shown) to vary the first impedance. In another variation, both the second capacitor 402 and the third capacitor 404 may be used to vary impedance. Likewise, the second antenna could be an inverted-F antenna that provides a varied second impedance in an equivalent manner. As mentioned in the explanation of Fig. 3, the second capacitor 402 and third variable capacitor 404 may include a ferroelectric dielectric with a dielectric constant responsive to a control voltage. Second capacitor 402 has as an interface on line 406 to accept the control voltage, and third capacitor 404 has an interface on line 408 to accept the control voltage. The ferroelectric variable capacitors 402 and 404 may be an interdigital, gap, or overlay capacitors.

In other aspects not shown, the impedance is controlled with a variable capacitor placed in shunt to line 104. Further, the match can be varied using an "L", "T", or π networks, to name a few examples. Further, the matching can be performed with conventional components, or combinations of conventional and FE components. It should also be understood that the inverted-F antenna may include capacitors to vary both the impedance, as well as the resonant frequency (see Fig. 3).

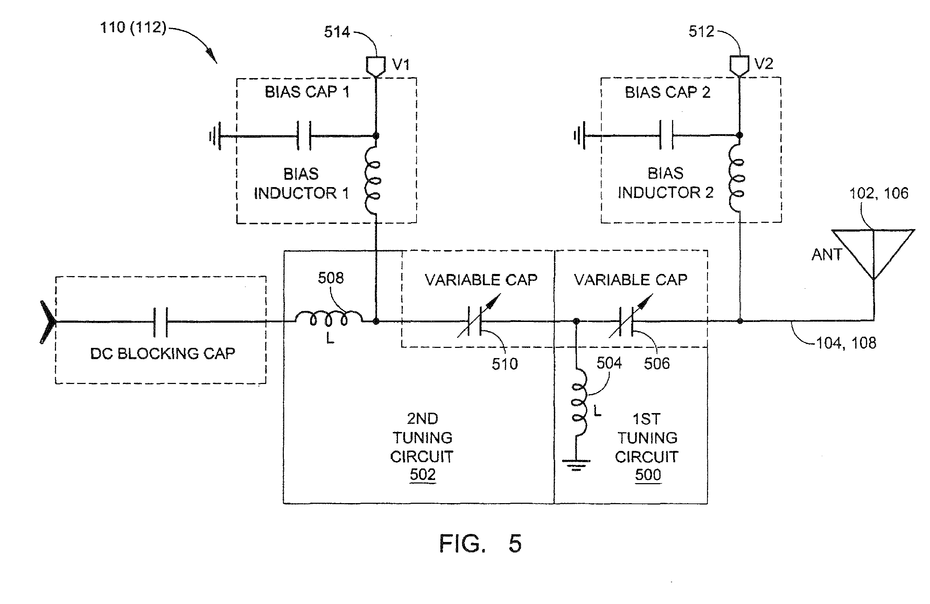

Fig. 5 is a schematic block diagram of an impedance adjustable matching circuit. The first matching circuit is used as an example, but the explanation below applies equally well to the second matching circuit. In one aspect, the first matching circuit 110 includes a first tuning circuit 500 and a second tuning circuit 502. Although these circuits are shown as arranged in series, parallel arrangements are also possible.

An exemplary first tuning circuit 500 may include a first inductor 504 with a fixed inductance value and a fifth variable capacitor 506 with a selectable capacitance value. Likewise, the second tuning circuit 502 includes a second inductor 508 with a fixed inductance value and a sixth variable capacitor 510 with a selectable capacitance value.

The fifth capacitor 506 and sixth capacitor 510 may include a ferroelectric dielectric with a dielectric constant responsive to a control voltage, and an interface to accept control voltages on lines 512 and 514, respectively. The first capacitor 506 and sixth capacitor 510 may be interdigital, gap, or overlay capacitors.

Although the first and second tuning circuits 500/502 are shown configured in an "L" topology, those skilled in the art would be able to enable the same functionality using tunable series elements, tunable shunt elements, π, "T", and combinations of the above-mentioned topologies in different aspects of the invention. Also, the tuning circuits can be enabled with a combination of conventional capacitors, voractor diodes, and/or FE capacitors.

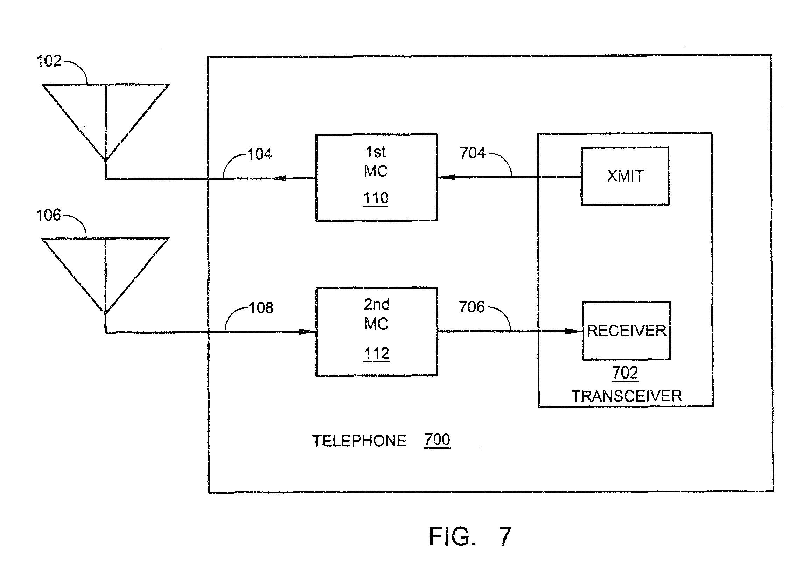

Fig. 7 is a schematic block diagram of the present invention wireless telephone with a full-duplex antenna matching system. The telephone 700 comprises a transceiver 702 having a transmit port on line 704 and a receiver port on line 706 to process antenna communications in a first frequency band. The first antenna 102 is effectively resonant at a frequency selectable first channel in a first frequency band, and has an interface port on line 104 with a first impedance at the first channel frequency. The second antenna 106 is effectively resonant at a frequency selectable second channel in the first frequency band, and has an interface on line 108 with a second impedance responsive at the second channel frequency.

A first matching circuit 110 has an output port connected to the first antenna interface port on line 104 with a first conjugate impedance at the first channel frequency. The first matching circuit 110 has an input port connected to the transceiver transmit port on line 704. A second matching circuit 112 has an input port connected to the second antenna interface port on line 108 with a second conjugate impedance at the second channel frequency. The second matching circuit 112 has an output port connected to the transceiver receive port on line 706.

In one aspect, the first matching circuit 110 has a frequency selectable first conjugate impedance in the first frequency band. Likewise, the second matching circuit 112 has a frequency selectable second conjugate impedance in the first frequency band.

In a second aspect, the first antenna 102 has a selectable first impedance, and the second antenna 106 has a selectable second impedance. In a third aspect, first antenna 102 resonance is frequency selectable, and the second antenna 106 resonance is frequency selectable.

In a different aspect of the telephone 700, the transceiver 702 additionally processes antenna communications in a second frequency band. In this aspect, the first antenna 102 resonates at a frequency selectable third channel in the second frequency band, with a corresponding third impedance at the third channel frequency. Likewise, the second antenna 106 resonates at a frequency selectable fourth channel in the second frequency band, with a corresponding fourth impedance at the fourth channel frequency. The first matching circuit 110 has a third conjugate impedance at the third channel frequency, and the second matching circuit 112 has a fourth conjugate impedance at the fourth channel frequency.

Typically, the telephone 700 is tuned to operate in either the first frequency band or the second frequency band, but not simultaneously in both the first and second frequency bands. However, the telephone 700 may operate so that the first and second antennas 102/106 effectively resonate simultaneously in the first frequency band. When tuned for second frequency band operation, the first and second antennas 102/106 effectively resonate simultaneously in the second frequency band.

Additional details of the first antenna 102, second antenna 106, first matching circuit 110, and second matching circuit 112 are described above in the explanations of Figs. 1, and 3-6 above, and are not repeated here in the interests of brevity.

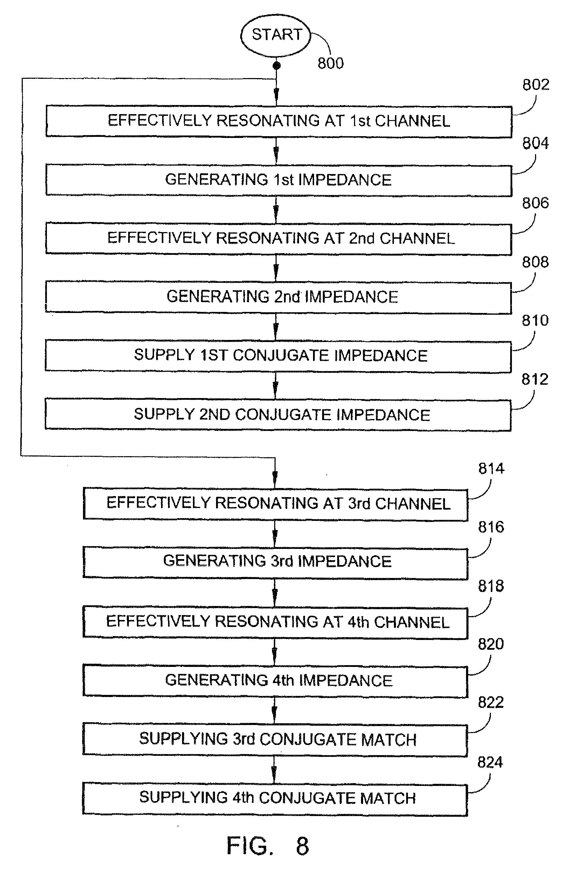

Fig. 8 is a flowchart illustrating the present invention method for full-duplex antenna impedance matching. Although the method is depicted as a sequence of numbered steps for clarity, no order should be inferred from the numbering unless explicitly stated. It should be understood that some of these steps may be skipped, performed in parallel, or performed without the requirement of maintaining a strict order of sequence. The method starts at Step 800.

Step 802 effectively resonates a first antenna, as defined above, at a frequency selectable first channel in a first frequency band. Step 804 generates a first antenna impedance at the first channel frequency. Step 806 effectively resonates a second antenna at a frequency selectable second channel in the first frequency band. With respect to Steps 804 and 806, in some aspects effectively resonating means resonating with an efficiency of greater than 30% at every channel in the first frequency band. Step 808 generates a second antenna impedance at the second channel frequency. Step 810 supplies a first conjugate impedance match at the first channel frequency. Step 812 supplies a second conjugate impedance match at the second channel frequency.

In one aspect of the method, supplying a first conjugate impedance match at the first channel frequency (Step 810) includes supplying a frequency selectable first conjugate impedance. Likewise, Step 812 supplies a frequency selectable second conjugate impedance.

In another aspect, generating a first antenna impedance at the first channel frequency (Step 804) includes generating a frequency selectable first impedance. Likewise, Step 808 generates a frequency selectable second impedance. In a different aspect, effectively resonating a first antenna at a frequency selectable first channel in a first frequency band (Step 802) includes selecting the frequency of resonance. In this aspect, Step 806 selects the frequency of resonance.

In a different aspect, the method comprises further steps. Step 814 effectively resonates the first antenna at a frequency selectable third channel in a second frequency band. Step 816 generates a third antenna impedance at the third channel frequency. Step 818 effectively resonates the second antenna at a frequency selectable fourth channel in the second frequency band. Step 820 generates a fourth antenna impedance at the fourth channel frequency. Step 822 supplies a third conjugate impedance match at the third channel frequency. Step 824 supplies a fourth conjugate impedance match at the fourth channel frequency.

For example, the first and second antennas may resonate (Steps 802 and 806) simultaneously at the first and second channels, respectively. Alternately the first and second antennas may resonate (Step 814 and 818) simultaneously at the third and fourth channels, respectively. Note, the method need not necessarily perform all four steps, Steps 802, 806, 814, and 818, simultaneously.

In one aspect, the first and second channels resonate (Step 802 and 806) in a first frequency band in the range between 824 and 894 MHz. Other first frequency band ranges include: between 1850 and 1990 MHz, between 880 and 960 MHz, between 1710 and 1880 MHz, between 1900 and 2100 MHz, between 410 and 450 MHz, between 2400 and 2480 MHz, between 4900 and 5900 MHz, and between 1565 and 1585 MHz, to name a few examples. These same ranges apply to the definition of the second frequency range.

In one aspect, effectively resonating a first antenna at a frequency selectable first channel in a first frequency band includes (Step 802) transmitting information via the first channel. Effectively resonating a second antenna at a frequency selectable second channel in a first frequency band (Step 806) includes receiving information via the second channel.

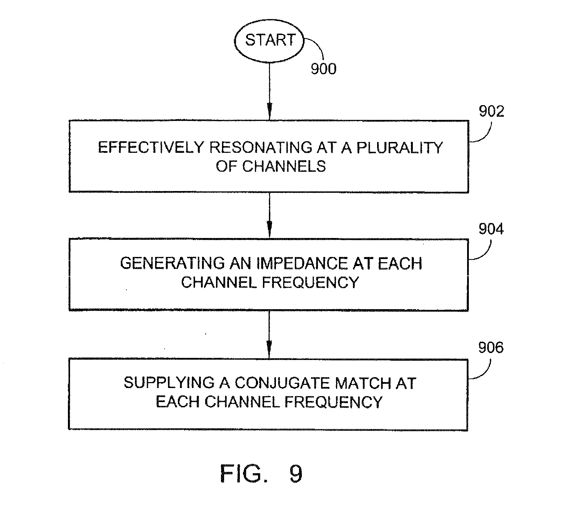

Fig. 9 is a flowchart illustrating an alternate aspect of the method of Fig. 8. The method starts at Step 900. Step 902 effectively resonates a plurality of antennas at a frequency selectable channel in the first frequency band. These channels may, or may not be at the same frequency. Step 904 generates an impedance at each channel frequency. Step 906 supplies a conjugate impedance match at each channel frequency. Alternately, stated, a conjugate match is supplied for each of the antennas.

A channel-selectable full-duplex antenna system and method have been provided. Examples of particular antenna designs, matching circuit designs, and operating frequencies have been described for the purposes of clarification. However, the invention is not limited to merely these examples. Other variations and embodiments of the invention will occur to those skilled in the art. According to an aspect of the present invention, a full-duplex antenna system for selectively tuning communication channels is provided, the system comprising: a first antenna effectively resonant at a frequency selectable first channel in an first frequency band, having an interface port with a first impedance at the first channel frequency; a second antenna effectively resonant at a frequency selectable second channel in the first frequency band, having an interface with a second impedance at the second channel frequency; a first matching circuit including a port connected to the first antenna interface port having a first conjugate impedance at the first channel frequency; and a second matching circuit including a port connected to the second antenna interface port having a second conjugate impedance at the second channel frequency.

According to an aspect of the present invention, the first matching circuit has a frequency selectable first conjugate impedance in the first frequency band; and the second matching circuit has a frequency selectable second conjugate impedance in the first frequency band.

According to an aspect of the present invention, the first antenna has a selectable first impedance; and the second antenna has a selectable second impedance.

According to an aspect of the present invention, the first antenna resonance is frequency selectable; and the second antenna resonance is frequency selectable.

According to an aspect of the present invention, the first antenna effectively resonates at a frequency selectable third channel in a second frequency band, with a corresponding third impedance at the third channel frequency supplied at the interface; wherein the second antenna effectively resonates a frequency selectable fourth channel in the second frequency band, with a corresponding fourth impedance at the fourth channel frequency supplied at the interface; wherein the first matching circuit has a third conjugate impedance at the third channel frequency; and wherein the second matching circuit has a fourth conjugate impedance at the fourth channel frequency.

According to an aspect of the present invention, the first and second antennas resonate simultaneously in the first frequency band; and the first and second antennas resonate simultaneously in the second frequency band.

According to an aspect of the present invention, the first antenna is an inverted-F antenna and further includes a first variable capacitor, connected in shunt between an antenna radiator and a reference voltage to vary the frequency of resonance; and the second antenna is an inverted-F antenna and further includes a second variable capacitor, connected in shunt between an antenna radiator and the reference voltage to vary the frequency of resonance.

According to an aspect of the present invention, the first and second variable capacitors include: a ferroelectric dielectric with a dielectric constant responsive to a control voltage; and an interface to accept the control voltage.

According to an aspect of the present invention, the first antenna is an inverted-F antenna and further includes a third variable capacitor, connected in series with the matching circuit to vary the first impedance; and the second antenna is an inverted-F antenna and further includes a fourth variable capacitor, connected in series with the second matching circuit to vary the second impedance.

According to an aspect of the present invention, the third and fourth variable capacitors include: a ferroelectric dielectric with a dielectric constant responsive to a control voltage; and an interface to accept the control voltage.

According to an aspect of the present invention, the first matching circuit includes: a first tuning circuit; and a second tuning circuit; and wherein the second matching circuit includes: a third tuning circuit; and a fourth tuning circuit.

According to an aspect of the present invention, the first tuning circuit includes: a first inductor with a fixed inductance value; a fifth variable capacitor with a selectable capacitance value; wherein the second tuning circuit includes: a second inductor, with a fixed inductance value; a sixth variable capacitor with a selectable capacitance value; wherein the third tuning circuit includes: a third inductor with a fixed inductance value; a seventh variable capacitor with a selectable capacitance value; and wherein the fourth tuning circuit includes: a fourth inductor with a fixed inductance value; an eighth variable capacitor with a selectable capacitance value.

According to an aspect of the present invention, the fifth, sixth, seventh, and eighth variable capacitors include: a ferroelectric dielectric with a dielectric constant responsive to a control voltage; and an interface to accept the control voltage.

According to an aspect of the present invention, the ferroelectric variable capacitors are selected from the group including interdigital, gap, and overlay capacitors.

According to an aspect of the present invention, the ferroelectric variable capacitors are selected from the group including interdigital, gap, and overlay capacitors.

According to an aspect of the present invention, a method for full-duplex antenna impedance matching is provided, the method comprising: effectively resonating a first antenna at a frequency selectable first channel in a first frequency band; generating a first antenna impedance at the first channel frequency; effectively resonating a second antenna at a frequency selectable second channel in the first frequency band; generating a second antenna impedance at the second channel frequency; supplying a first conjugate impedance match at the first channel frequency; and supplying a second conjugate impedance match at the second channel frequency.

According to an aspect of the present invention, supplying a first conjugate impedance match at the first channel frequency includes supplying a frequency selectable first conjugate impedance; and wherein supplying a second conjugate impedance match at the second channel frequency includes supplying a frequency selectable second conjugate impedance.

According to an aspect of the present invention, generating a first antenna impedance at the first channel frequency includes generating a frequency selectable first impedance; and generating a second antenna impedance at the second channel frequency includes generating a frequency selectable second impedance.

According to an aspect of the present invention, effectively resonating a first antenna at a frequency selectable first channel in a first frequency band includes selecting the frequency of resonance; and effectively resonating a second antenna at a frequency selectable second channel in a first frequency band includes selecting the frequency of resonance.

According to an aspect of the present invention, the following steps are further included: effectively resonating the first antenna at a frequency selectable third channel in a second frequency band; generating a third antenna impedance at the third channel frequency; effectively resonating the second antenna at a frequency selectable fourth channel in the second frequency band; generating a fourth antenna impedance at the fourth channel frequency; supplying a third conjugate impedance match at the third channel frequency; and supplying a fourth conjugate impedance match at the fourth channel frequency.

According to an aspect of the present invention, the first and second antennas resonate simultaneously at the first and second channels, respectively; and the first and second antennas resonate simultaneously at the third and fourth channels, respectively.

According to an aspect of the present invention, effectively resonating a first antenna at a frequency selectable first channel in a first frequency band includes transmitting information via the first channel; and effectively resonating a second antenna at a frequency selectable second channel in a first frequency band includes receiving information via the second channel.

## Claims

1. An antenna system for a wireless communications device **characterized by**
a first transmit inverted-F antenna (102, 400) having a fixed resonance and an adjustable antenna impedance for selecting a transmit channel, the first transmit inverted-F antenna (102, 400) comprising:
a first variable capacitor (402) is series in a grounded resonator section (403) of the first transmit inverted-F antenna (102, 400), the first variable capacitor (402) comprising a first ferroelectric dielectric with a first dielectric constant responsive to a first control voltage applied to the first ferroelectric dielectric on a first interface line (406);
a second capacitor (404) in series with a matching circuit section of the first transmit inverted-F antenna (102, 400) for connection to a first matching circuit (110);
wherein transmit channel selectivity of the first transmit inverted-F antenna (102, 400) is provided by adjusting the first control voltage applied to the first ferroelectric dielectric of the first transmit inverted-F antenna (102, 400); and
the first matching circuit (110) connected to the first transmit inverted-F antenna (102, 400).

2. The antenna system of claim 1, wherein the first matching circuit (110) has an adjustable matching circuit impedance.

3. The system of claim 2, wherein the first matching circuit (110) comprises:
a first tuning circuit (500) having,
a first inductor (504) with a fixed inductance value;
a fifth variable capacitor (506) with a selectable capacitance value; and
a second tuning circuit (502) having,
a second inductor (508) with a fixed inductance value;
a sixth variable capacitor (510) with a selectable capacitance value.

4. The antenna system of claim 1, wherein the second capacitor (404) is a second variable capacitor (404) comprising a second ferroelectric dielectric with a second dielectric constant responsive to a second control voltage applied to the second ferroelectric dielectric on a second interface line (408);
wherein transmit channel selectivity of the first transmit inverted-F antenna (102, 400) is provided by adjusting at least one of the first control voltage applied to the first ferroelectric dielectric or the second control voltage applied to the second ferroelectric dielectric to adjust the antenna impedance of the first transmit inverted-F antenna (102, 400).

5. The antenna system of claim 1, further comprising:
a second receive inverted-F antenna (106, 400') having a fixed resonance and an adjustable antenna impedance for selecting a receive channel, the second receive inverted-F antenna (106, 400') comprising:
a third variable capacitor (402') is series in a grounded resonator section (403') of the second receive inverted-F antenna (106, 400'), the third variable capacitor (402') comprising a third ferroelectric dielectric with a third dielectric constant responsive to a third control voltage applied to the third ferroelectric dielectric on a third interface line (406');
a fourth capacitor (404') in series with a matching circuit section of the second receive inverted-F antenna (106, 400') for connection to a second matching circuit (112);
wherein receive channel selectivity of the second receive inverted-F antenna (106, 400') is provided by adjusting the third control voltage applied to the third ferroelectric dielectric of the second receive inverted-F antenna (106, 400'); and
the second matching circuit (112) connected to the second receive inverted-F antenna (106, 400').

6. The antenna system of claim 5, wherein the second matching circuit (112) has an adjustable matching circuit impedance.

7. The antenna system of claim 6, where the second matching circuit (112) comprises
a third tuning circuit (500') having,
a third inductor (504') with a fixed inductance value;
a seventh variable capacitor (506') with a selectable capacitance value;
and
a fourth tuning circuit (502') having,
a fourth inductor (508') with a fixed inductance value;
an eighth variable capacitor (510') with a selectable capacitance value.

8. The antenna system of claim 5, wherein the fourth capacitor (404') is a fourth variable capacitor (404') comprising a fourth ferroelectric dielectric with a fourth dielectric constant responsive to a fourth control voltage applied to the fourth ferroelectric dielectric on a fourth interface line (408');
wherein transmit channel selectivity of the second receive inverted-F antenna (106, 400') is provided by adjusting at least one of the third control voltage applied to the third ferroelectric dielectric or the fourth control voltage applied to the fourth ferroelectric dielectric to adjust the antenna impedance of the second receive inverted-F antenna (106, 400').

9. An antenna system for a wireless communications device **characterized by**
a first transmit inverted-F antenna (102, 300) having a fixed impedance and an adjustable antenna resonance for selecting a transmit channel, the first transmit inverted-F antenna (102, 300) comprising:
a first variable capacitor (302) connected in shunt between an antenna radiator (304) and a reference voltage (306) of the first transmit inverted-F antenna (102, 300), the first variable capacitor (302) comprising a first ferroelectric dielectric with a first dielectric constant responsive to a first control voltage applied to the first ferroelectric dielectric on a first interface line (308);
a matching circuit section of the first transmit inverted-F antenna (102, 300) for connection to a first matching circuit (110);
wherein transmit channel selectivity of the first transmit inverted-F antenna (102, 300) is provided by adjusting the first control voltage applied to the first ferroelectric dielectric of the first transmit inverted-F antenna (102, 300).

10. The antenna system of claim 9, wherein the reference voltage (306) is ground.

11. The antenna system of claim 9, further comprising
the first matching circuit (110) connected to the first transmit inverted-F antenna (102, 300), wherein the first matching circuit (110) has an adjustable matching circuit impedance.

12. The antenna system of claim 9, further comprising:
a second receive inverted-F antenna (106, 300') having a fixed impedance and an adjustable antenna resonance for selecting a transmit channel, the second receive inverted-F antenna (106, 300') comprising:
a second variable capacitor (302') connected in shunt between an antenna radiator (304') and a reference voltage (306') of the second receive inverted-F antenna (106, 300'), the second variable capacitor (302') comprising a second ferroelectric dielectric with a second dielectric constant responsive to a second control voltage applied to the second ferroelectric dielectric on a second interface line (308');
a matching circuit section of the second receive inverted-F antenna (106, 300') for connection to a second matching circuit (112);
wherein receive channel selectivity of the second receive inverted-F antenna (106, 300') is provided by adjusting the second control voltage applied to the second ferroelectric dielectric of the second receive inverted-F antenna (106, 300')

13. The antenna system of claim 12, further comprising
the second matching circuit (112) connected to the second receive inverted-F antenna (106, 300'), wherein the second matching circuit (112) has an adjustable matching circuit impedance.

14. An antenna system according to claims 1 and 9, wherein the first transmit inverted-F antenna (102, 300, 400) is adjusted for transmitting a first channel in a high sub-band of a first frequency band to a second channel in the high sub-band by adjusting at least one of the antenna resonance or the antenna impedance; and
wherein the first matching circuit (110) impedance is adjusted to provide a conjugate match to the antenna impedance of the first transmit inverted-F antenna (102, 300, 400).

15. An antenna system according to claims 5 and 12, wherein the second receive inverted-F antenna (106, 300', 400') is adjusted for receiving a third channel in a low sub-band of a first frequency band to a fourth channel in the low sub-band by adjusting at least one of the antenna resonance or the antenna impedance; and
wherein the second matching circuit (112) impedance is adjusted to provide a conjugate match to the antenna impedance of the second receive inverted-F antenna (106, 300', 400').
